(19) **Europäisches Patentamt / European Patent Office / Office européen des brevets**

(11) **EP 1 577 346 B1**

(12) **EUROPEAN PATENT SPECIFICATION**

(45) Date of publication and mention
of the grant of the patent:
**18.02.2009 Bulletin 2009/08**

(51) Int Cl.:
**C08L 67/04** (2006.01)

(21) Application number: **03786292.7**

(86) International application number:
**PCT/JP2003/016642**

(22) Date of filing: **24.12.2003**

(87) International publication number:
**WO 2004/058893 (15.07.2004 Gazette 2004/29)**

(54) **POLYLACTIC ACID POLYMER COMPOSITION FOR THERMOFORMING, POLYLACTIC ACID POLYMER SHEET FOR THERMOFORMING, AND THERMOFORMED OBJECT OBTAINED THEREFROM**

POLYMILCHSÄUREPOLYMERZUSAMMENSETZUNG ZUM THERMOFORMEN, POLYMILCHSÄUREPOLYMERFLÄCHENGEBILDE ZUM THERMOFORMEN UND THERMOGEFORMTERGEGENSTAND DARAUS

COMPOSITION POLYMERE A BASE D'ACIDE POLYACTIQUE POUR THERMOFORMAGE, FEUILLE POLYMERE A BASE D'ACIDE POLYACTIQUE POUR THERMOFORMAGE ET OBJET THERMOFORME CORRESPONDANT

(84) Designated Contracting States:
**DE FR GB IT**

(30) Priority: **26.12.2002 JP 2002376718**

(43) Date of publication of application:
**21.09.2005 Bulletin 2005/38**

(73) Proprietor: **MITSUBISHI PLASTICS, INC.**
**Chiyoda-ku,**
**Tokyo 100-0005 (JP)**

(72) Inventor: **ARITAKE, Toshiyuki,**
**c/o Mitsubishi Plastics, Inc.**
**Nagahama-shi,**
**Shiga 526-0023 (JP)**

(74) Representative: **Grünecker, Kinkeldey, Stockmair & Schwanhäusser**
**Anwaltssozietät**
**Leopoldstrasse 4**
**80802 München (DE)**

(56) References cited:
**EP-A- 0 510 998**         **DE-A1- 4 230 097**
**JP-A- 2002 155 197**

• **PATENT ABSTRACTS OF JAPAN vol. 2000, no. 04, 31 August 2000 (2000-08-31) & JP 2000 017163 A (SHIMADZU CORP), 18 January 2000 (2000-01-18)**

**Description**

Technical Field

This invention relates to a biodegradable resin composition for thermoforming, polylactic acid polymer sheet for thermoforming, and thermoformed object obtained therefrom.

Background Art

Blister packs, which are widely used to exhibit various kinds of merchandise, box-shaped packages formed by bending, shell type packaging cases, etc. are ordinarily formed by subjecting a resin sheet to thermoforming such as vacuum forming, air-pressure forming or hot bending. Packages for such foods as daily dishes, vegetables, sandwiches and lunch that are used e.g. in convenience stores are also formed by similar thermoforming.

For such blister packs, box-shaped packages, shell type packaging cases and food containers, transparent ones are especially preferred so that the contents can be seen therethrough. Thus, many blister packs are formed of sheets of polyvinyl chloride, polyethylene terephthalate or polystyrene.

These materials have a problem in that because of their chemical and biological stability, after discarded, they remain in the natural environment practically without decomposing and accumulate or scatter in the natural environment, thus polluting the biosphere. When they are buried, they shorten the life of the burial site because they don't decompose.

Now, to protect the environment, biodegradable materials are being vigorously studied and developed. Among them, a polylactic acid resin is considered to be one of the most promising biodegradable materials. Since polylactic acid resins are biodegradable, they naturally hydrolyze in the earth or water and are decomposed by microorganisms into harmless substances. Also, because polylactic acids are low in calorific value, they will not damage the furnace when burned. Since they are derived from plants, they can help humans to become free from dependence on oil, whose underground reserves are expected to be depleted.

One problem with such polylactic acid resins is their low heat resistance. While sheets of polylactic acid resins and articles formed of such sheets are being transported in a truck or a ship, or stored in a storage house, especially in summer time, they tend to be deformed and/or fused to each other due to elevated temperature in the truck, ship or storage house.

Another problem with polylactic acid resins is their brittleness. Due to their brittleness, it is difficult to use them in the form of sheets.

It is however known that by biaxially sheets for blister stretching polylactic acid sheets so that the sheets have orientation, and articles formed from such sheets that have superior transparency, impact resistance and heat resistance are obtainable (patent publication 1).

In patent publication 1, there is a description that the DL ratio of the polylactic acid may be selected from among the entire range, i.e. the range from 100/0 to 0/100 (paragraph [0020] of Patent document 1). But in order for the polylactic acid sheet to have orientation, it is necessary that the polylactic acid be crystallized, and it is well-known to those of ordinary skill in the art that polylactic acid shows crystallinity only if it is made up virtually only of one of the L-lactic acid and D-lactic acid. From the fact that the D/L ratio of the polylactic acid used in any of the examples of Patent document 1 is in the range of 4-5/96-95, polylactic acid disclosed in Patent document 1 are considered to be all crystallized.

It is also known that from a polylactic acid having a predetermined surface orientation (ΔP), heat of fusion (ΔHm), and heat of cold crystallization (ΔHc), it is possible to form an article having superior impact resistance and moist heat resistance (Patent document 2). Since this polylactic acid has ΔHm and ΔHc, it is crystalline.

(Patent document 1: JP patent publication 8-73628 (see for example claim 1 and paragraph [0077]); Patent document 2: JP patent publication 9-25345 (see for example claim 1 and paragraph [0048])

JP-A-200017163 discloses a polylactic acid polymer composition comprising a mixture of two amorphous polymers, which are melt-blended together so as to form a crystalline polylactic acid sterocomplex polymer. Amorphous polymer (A) comprises 70 to 95 mol% of L-lactic acid units, D-lactic acid units and/or 5 to 30 mol% of copolymerization component units other than a lactic acid. Amorphous polymer (B) comprises 70 to 95 mol% of D-lactic acid units, L-lactic acid units and/or 5 to 30 mol% of copolymerization component units other than a lactic acid.

JP-A-2002155197 relates to a resin composition comprising 50 to 99.5% of a polylactic acid resin containing at least 20 mass% of a polylactic acid having a wide average molecular weight not higher than 160,000, and an L-form to D-form ratio of not lower than 95/5 and not higher than 5 to 95, and further 0.1 to 2.5 mass% isocyanate compound.

Disclosure of the Invention

In order for a sheet formed of a polylactic acid as disclosed in Patent document 1 or 2 to show sufficient impact resistance and heat resistance, it is often necessary that the sheet have a sufficient thickness. But when such a thick sheet is subjected to thermoforming, while it maintains good impact resistance and heat resistance, pressure necessary during thermoforming tends to be high, so that formability may deteriorate.

An object of the present invention is to provide a polylactic acid polymer composition to be thermoformed which shows good formability during thermoforming while maintaining sufficient impact resistance and heat resistance, a sheet formed of such a composition, and an article obtained by thermoforming such a sheet.

According to this invention, in order to achieve this object, there is provided a polylactic acid polymer composition to be subjected to thermoforming, the composition comprising a mixture of an essentially amorphous polylactic acid polymer and a crystalline polylactic acid polymer, wherein the amorphous polylactic acid polymer is present in an amount of more than 50% of the crystalline polylactic acid polymer.

From another aspect of the invention, there is provided a polylactic acid polymer sheet to be subjected to thermoforming which is formed of the abovementioned polylactic acid polymer composition to be subjected to thermoforming wherein the essentially amorphous polylactic acid polymer comprises L-lactic acid and D-lactic acid of which the content ratio (L-lactic acid (%) : D-lactic acid (%)) is 92 : 8 to 8 : 92, and the crystalline polylactic acid polymer contains L-lactic acid and D-lactic acid of which the content ratio (L-lactic acid (%) : D-lactic acid (%)) is not less than 94 : 6 or not more than 6 : 94, the crystalline polylactic acid polymer being present in an amount of 10 to 200 parts by weight based on 100 parts by weight of the amorphous polylactic acid polymer.

By using a mixture of an essentially amorphous polylactic acid polymer and a crystalline polylactic acid polymer, the composition exhibits high impact resistance and heat resistance inherent to the crystalline polylactic acid polymer. The amorphous polylactic acid polymer imparts flexibility to the composition, thereby improving formability during thermoforming.

Preferably, in obtaining a thermoformed article by subjecting the polylactic acid polymer sheet to thermoforming, the forming temperature is determined so as to satisfy the following conditions (1) so that the thermoformed article has sufficient formability and shape retainability, impact resistance and heat resistance. Such an article can be advantageously used as blister packs, food packaging containers, shell type packaging cases, etc.

(1) Forming temperature that satisfies the relation $0.005 < \Delta Hmf/\Delta Hm < 0.5$ when the polylactic acid polymer sheet to be subjected to thermoforming is heated, where $\Delta Hmf$ is a heat of fusion in a temperature range from the glass transition temperature to the forming temperature of the polylactic acid polymer sheet to be subjected to thermoforming.

Brief Description of the Drawings

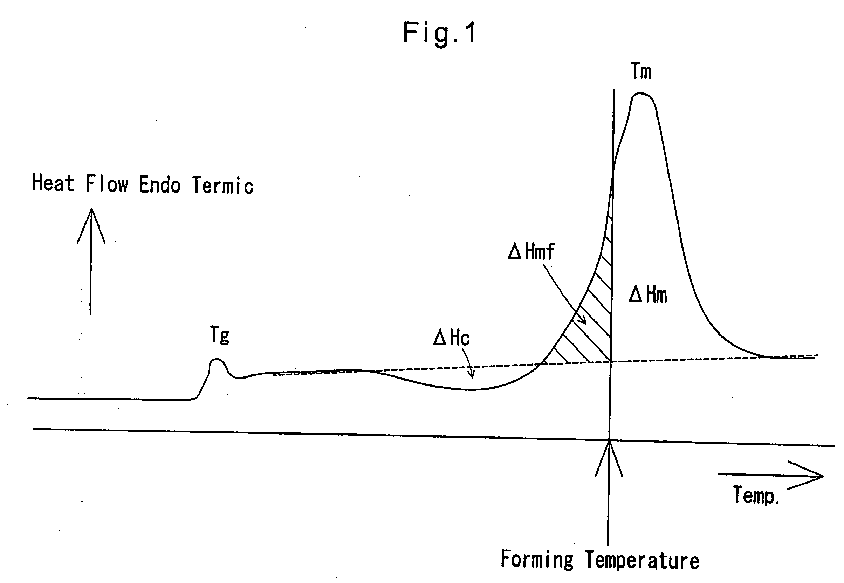

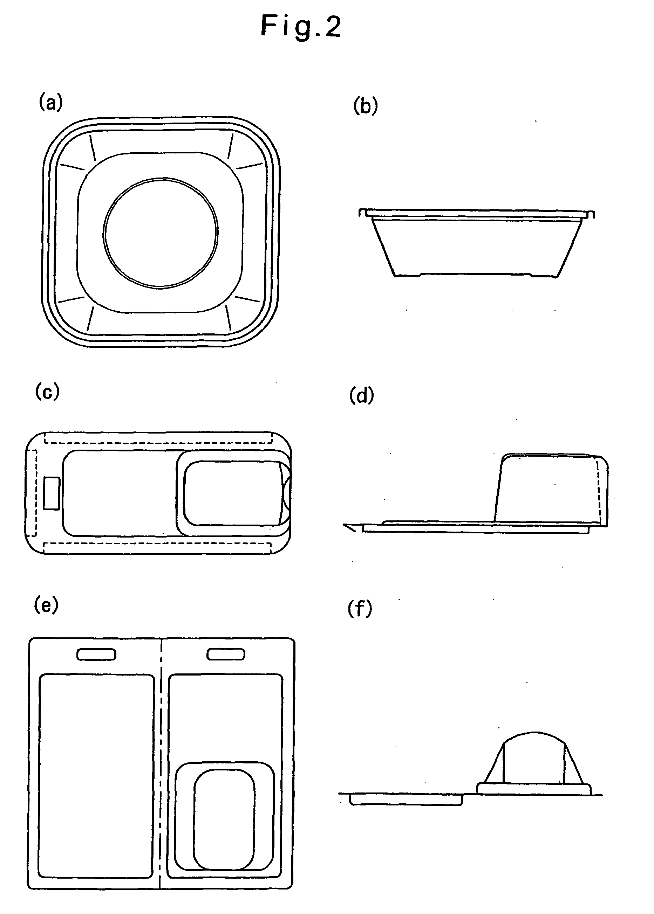

Fig. 1 is a DSC chart of the polylactic acid polymer sheet to be subjected to thermoforming according to the present invention; Fig. 2(a) is a plan view of a food container manufactured in Examples; Fig. 2(b) is a side view of Fig. 2 (a); Fig. 2(c) is a plan view of a blister pack manufactured in Examples; Fig. 2(d) is a side view of Fig. 2(c); Fig. 2 (e) is a plan view of a shell type packaging case manufactured in Examples; and Fig. 2(f) is a side view of Fig. 2(e).

Best Mode for Embodying the Invention

The invention is now described more specifically. The polylactic acid polymer composition to be subjected to thermoforming according to the present invention comprises a mixture of an essentially amorphous polylactic acid polymer (hereinafter referred to as "resin A") and a crystalline polylactic acid polymer (hereinafter referred to as "resin B"), with resin A present in an amount of more than 50 percent of resin B. The polylactic acid polymers forming resin A and resin B may be homopolymers of which the structural unit is L-lactic acid or D-lactic acid, i.e. poly(L-lactic acid) or poly(D-lactic acid), or copolymers of which the structural unit comprises both L-lactic acid and D-lactic acid, i.e. poly(DL-lactic acid), or a mixture thereof.

The polylactic acid polymers may be polymerized by condensation polymerization, ring-opening polymerization or any other known method. In condensation polymerization, a polylactic acid resin of a desired composition is obtainable by directly subjecting L-lactic acid, D-lactic acid or a mixture thereof to dehydration/condensation polymerization.

In ring-opening polymerization, a polylactic acid polymer is obtainable by polymerizing lactides, which are cyclic dimers of lactic acids, in the presence of a catalyst while optionally adding a polymerization regulator. There are a plurality of lactides, i.e. L-lactide, which is a dimer of L-lactic acid, D-lactide, which is a dimer of D-lactic acid, and DL-lactide, which comprises L-lactide and D-lactide. A polylactic acid polymer having a desired composition and crystallinity is obtainable by mixing and polymerizing necessary ones of lactides.

If e.g. higher heat resistance is required, small amounts of copolymer components may be added. It is also possible to use nonaliphatic dicarboxylic acids such as terephthalic acid, or nonaliphatic diols such as ethylene oxide adducts of bisphenol A.

In order to increase the molecular weight, it is also possible to use small amounts of chain extenders such as diisocyanate compounds, epoxy compounds or acid anhydrides.

The polylactic acid polymers may also be copolymers of lactic acid and other hydroxy-carboxylic acid units such as $\alpha$-hydroxy-carboxylic acid, or copolymers of lactic acid and aliphatic diols/aliphatic dicarboxylic acids. Such other hydroxy-carboxylic acid units include optical isomers of lactic acids (D-lactic acid for L-lactic acid, and L-lactic acid for D-lactic acid), glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, bifunctional aliphatic hydroxy-carboxylic acids such as 2-hydroxycaproic acid, and lactones such as caprolactone, butyrolactone and valerolactone.

Aliphatic diols which can be copolymerized into the polylactic acid polymers include ethylene glycol, 1,4-butanediol, and 1,4-cyclohexanedimethanol.

Aliphatic dicarboxylic acids include succinic acid, adipic acid, suberic acid, sebacic acid and dodecanedioic acid.

Preferably, the polylactic acid polymers used in this invention have a weight-average molecular weight of 60000 to 700000, more preferably 60000 to 400000, especially preferably 60000 to 300000. If the weight-average molecular weight is less than 60000, practical physical properties such as mechanical physical properties and heat resistance will scarcely reveal themselves. If greater than 700000, the melt viscosity will be so high as to deteriorate formability.

The ratio (%) of the L-lactic acid and D-lactic acid in resin A, i.e. the essentially amorphous polylactic acid polymer is preferably from 92 : 8 to 8 : 92, more preferably from 91 : 9 to 9 : 91. Outside of this preferable range, the polylactic acid polymer tends to develop crystallinity, thereby making it difficult to thermoform the polylactic acid polymer sheet to be subjected to thermoforming that comprises the thus obtained polylactic acid polymer composition to be thermoformed into desired shape.

The ratio (%) of the L-lactic acid and D-lactic acid in resin B, i.e. the crystalline polylactic acid polymer is preferably not less than 94 : 6 or not more than 6 : 94, more preferably not less than 94.5 : 5.5 or not more than 5.5 : 94.5. Outside of this range, the polylactic acid polymer tends to be amorphous. Thus, it tends to be difficult to impart sufficient impact resistance and heat resistance to the polylactic acid polymer composition obtained.

Resin B is preferably present in the mixture of resins A and B in an amount of 10 to 200 parts by weight, more preferably 20 to 100 parts by weight, based on 100 parts by weight of resin A. If less than 10 parts by weight, it tends to be difficult to impart sufficient impact resistance and heat resistance to the polylactic acid polymer obtained. If more than 200 parts by weight, it is sometimes difficult to thermoform the polylactic acid polymer sheet to be subjected to thermoforming that comprises the thus obtained polylactic acid polymer composition to be thermoformed into desired shape.

To the polylactic acid polymer composition, besides resins A and B, an aliphatic polyester other than a polylactic acid polymer may be added. Preferably, such an aliphatic polyester other than a polylactic acid polymer is preferably present in an amount of 0.1 to 10 parts by weight, more preferably 0.5 to 7 parts by weight, based on 100 parts by weight of the total amount of resins A and B. Within this range, it is possible to further improve the impact resistance of the composition without significantly deteriorating its transparency and formability. If such an aliphatic polyester other than a polylactic acid polymer is present in an amount of less than 0.1 parts by weight, the impact resistance will not improve sufficiently. If it is present in an amount of more than 10 parts by weight, transparency tends to be insufficient if transparency is required.

Preferably, such an aliphatic polyester other than a polylactic acid polymer has a glass transition temperature (Tg) not exceeding 0 degrees Celsius and a melting point (Tm) of not less than 60 degrees Celsius.

If the Tg value is higher than 0 degrees Celsius, the impact resistance of the sheet obtained from the polylactic acid polymer composition to be thermoformed will not improve sufficiently. Also, its transparency will deteriorate because the aliphatic polyester forms spherulites. If the Tm value is lower than 60 degrees Celsius, the heat resistance will be insufficient.

The aliphatic polyester other than a polylactic acid polymer may be an aliphatic polyester obtained by condensing an aliphatic diol and an aliphatic dicarboxylic acid, an aliphatic polyester obtained by subjecting a cyclic lactone to ring-opening polymerization, a synthetic aliphatic polyester or an aliphatic polyester synthesized in microbes.

The aliphatic polyester obtained by condensing an aliphatic diol and an aliphatic dicarboxylic acid is obtained by condensing, as an aliphatic diol or diols, one or more of ethylene glycol, 1,4-butanediol, 1,4-cyclohexanedimethanol, etc. and as an aliphatic dicarboxylic acid or acids, one or more of succinic acid, adipic acid, suberic acid, sebacic acid, dodecanedioic acid, etc. A desired polymer is then obtained by optionally extending chains with e.g. isocyanate compounds.

The aliphatic polyester obtained by subjecting cyclic lactones to ring-opening polymerization is typically obtained by polymerizing, as a cyclic monomer or monomers, one or more of $\varepsilon$-caprolactone, $\delta$-valerolactone, $\beta$-methyl-$\delta$-valerolactone, etc.

Synthetic aliphatic polyesters include copolymers of cyclic anhydrides and oxiranes, such as copolymers of succinic anhydride and ethylene oxide or propylene oxide.

Among known aliphatic polyesters synthesized in microbes is an aliphatic polyester synthesized in microbes, such as *Alcaligenes eutrophus* by the action of acetyl coenzyme A. While this aliphatic polyester mainly comprises poly-β-hydroxybutyric acid (poly-3HB), it is industrially advantageous to copolymerize it with valeric acid units (HV) into a copolymer of poly(3HB-co-3HV), thereby improving its practicality as a plastic. The HV copolymerization ratio is ordinarily 0 to 40 percent. A hydroxyalkanoate having longer chains may be copolymerized, too.

Specific aliphatic polyesters other than polylactic acid polymers may be at least one substance selected from the group consisting of polybutylene succinate, polybutylene succinate adipate, polybutylene adipate terephthalate, polycaprolactone, polyglycolic acid, polyester carbonate, copolymers of polyhydroxybutyrate and polyhydroxyvalerate, and copolymers of polyhydroxybutyrate and polyhydroxyhexanoate.

The polylactic acid polymer composition according to the present invention may be produced by blending or extruding/pelletizing.

If it is produced by blending, resins A and B, which form the polylactic acid polymer composition, and optionally, the aliphatic polyester other than a polylactic acid polymer as a impact resistance modifier, and inorganic particles are sufficiently dried and blended in a blender to form pellets as the composition according to the invention.

If the composition is produced by extruding/pelletizing, resins A and B, which form the polylactic acid polymer composition to be thermoformed, and optionally, the aliphatic polyester other than a polylactic acid polymer as a impact resistance modifier, and inorganic particles are sufficiently dried and supplied to an extruder. The melt extrusion temperature should be determined taking into consideration the fact that the melting point of the polylactic acid polymer composition to be thermoformed varies with the ratio of the L-lactic acid and D-lactic acid, and the melting point and the mixture ratio of the aliphatic polyester other than a polylactic acid polymer. Actually, the melt extrusion temperature is preferably 100 to 250 degrees Celsius. Then, the mixture is extruded in the form of strands, and cut into pellets by a strand cutter. A desired polylactic acid polymer composition to be thermoformed is thus obtained.

Of the above two methods, the latter is preferable to uniformly mix the components, though care must be taken not to reduce the molecular weight due to decomposition.

In order to improve various physical properties, to the polylactic acid polymer composition to be thermoformed, heat stabilizers, light stabilizers, light absorbers, plasticizers, inorganic fillers, colorants, pigments, etc may be added.

A polylactic acid polymer sheet to be thermoformed may be produced from the polylactic acid polymer composition by any ordinary method such as extrusion or casting. But for higher production efficiency, extrusion is preferable. Optionally, the polylactic acid polymer composition may be used as an outer layer or an intermediate layer of a laminate of which the other layers are formed of other biodegradable resin compositions so that the laminate has printability or heat sealability.

The sum of the thicknesses of the layers formed of other biodegradable resin compositions should be within such a range as not to deteriorate formability of the laminate obtained. Specifically, it is preferably not more than 30%, more preferably not more than 20%, of the thickness of the laminate. If this value is greater than 30%, the thermoformability of the laminate may deteriorate.

Description is now made on specifically how the polylactic acid polymer sheet to be thermoformed is produced from the polylactic acid polymer composition to be thermoformed by extrusion.

The polylactic acid polymer composition to be thermoformed is dried sufficiently to remove moisture, melted in an extruder and extruded from a die. The melt extrusion temperature should be determined taking into consideration the fact that the melting point of the polylactic acid polymer composition to be thermoformed varies with the ratio of the L-lactic acid and D-lactic acid, and the melting point and the mixture ratio of the aliphatic polyester. Specifically, the melt extrusion temperature is preferably 100 to 250 degrees Celsius.

If the composition is laminated on layers of other biodegradable resin compositions in order to improve printability and heat sealability, it may be laminated using two or more multimanifolds or feed blocks and extruded from a slit-shaped die in the form of a two or more layers of molten sheet. The thicknesses of the respective layers can be controlled by adjusting the flow rate of polymers with fixed-quantity feeders such as gear pumps.

Then, the single-layer or multi-layer molten sheet extruded from the die is rapidly cooled to a temperature below its glass transition temperature on a rotary cooling drum to obtain an essentially amorphous, non-oriented polylactic acid polymer sheet to be thermoformed. In order to improve smoothness and uniformity in thickness of the polylactic acid polymer sheet to be thermoformed, the polymer sheet is preferably brought into close contact with the rotary cooling drum as closely as possible by e.g. an electrostatic application method or a liquid coating method.

The polylactic acid polymer sheet thus obtained has no sufficient impact resistance and heat resistance yet. It is possible to increase the impact resistance and heat resistance to a sufficient level by crystallizing resin B in the polylactic acid polymer sheet to be thermoformed when the sheet is thermoformed into a thermoformed article. But it is also possible to increase the impact resistance and heat resistance before thermoforming the sheet by e.g. heating and then gradually cooling the sheet, thereby crystallizing resin B in the polylactic acid polymer sheet, or uniaxially or biaxially stretching the sheet to crystallize resin B in the sheet. In this case, the sheet maintains high impact resistance and heat resistance even after it has been thermoformed into a thermoformed article.

Surface orientation ($\Delta P$) can be used as an index of orientation of the biaxially oriented polylactic acid polymer sheet to be thermoformed. The value $\Delta P$ is preferably $3.0 \times 10^{-3}$ to $30 \times 10^{-3}$, more preferably $3.0 \times 10^{-3}$ to $15 \times 10^{-3}$. If this value is less than $3.0 \times 10^{-3}$, the heat resistance and impact resistance tend to be insufficient. If greater than $30 \times 10^{-3}$, continuity of orientation may be lost, or the orientation tends to be so large as to deteriorate thermoformability.

In order for the value $\Delta P$ to be within the above preferred range, the sheet is preferably stretched at least in one direction at a temperature of 50 to 100 degrees Celsius by 1.5 to 5 times at a rate of 100 to 10000 %/minute.

The thus stretched polylactic acid polymer sheet to be thermoformed is subjected to heat treatment while being fixed to obtain a heat-fixed, stretched/oriented sheet. By heat-fixing the sheet, sagging of the sheet is prevented. The heat resistance of the sheet improves, too.

The heat-fixing temperature and time are determined such that the difference between the heat of fusion $\Delta Hm$ and the heat of cold crystallization $\Delta Hc$, i.e. ($\Delta Hm - \Delta Hc$) is preferably 5 to 20 J/g, more preferably 7 to 20 J/g, and the value $\{(\Delta Hm - \Delta Hc)/ \Delta Hm\}$ is preferably not less than 0.85, more preferably not less than 0.90.

If the value ($\Delta Hm - \Delta Hc$) is less than 5 J/g, it is difficult for the polylactic acid polymer sheet to have sufficient heat resistance. If greater than 20 J/g, no sufficient thermoformability may be achievable.

If the value $\{(\Delta Hm \cdot \Delta Hc)/\Delta Hm\}$ of the polylactic acid polymer sheet is less than 0.85, it is difficult for the sheet to have sufficient heat resistance. The theoretical upper limit of this value is 1.0.

The heat-fixing temperature is preferably not less than the glass transition temperature (Tg) of the polylactic acid polymer composition and not more than its melting temperature (Tm), more preferably not less than Tg + 20 degrees Celsius and not more than Tm minus 10 degrees Celsius, further preferably not less than Tg + 40 degrees Celsius and not more than Tm minus 20 degrees Celsius.

If the heat-fixing temperature is lower than Tg, the sheet will not sufficiently crystallize, so that its heat resistance tends to be poor. If this temperature is higher than Tm, the sheet may break during heat fixing.

The shrinkage of the biaxially stretched polylactic acid polymer sheet manufactured in the above-described manner is preferably not more than 10 percent, more preferably not more than 5 percent, both in its longitudinal and transverse directions, when left in an environment of 90 degrees Celsius for 30 minutes. If the shrinkage is over 10 percent, the sheet tends to suffer from heat shrinkage during thermoforming.

The thickness of the polylactic acid polymer sheet obtained in the above manner is not particularly limited provided the sheet can be used in ordinary thermoforming. Specifically, its thickness is preferably within the range of 0.03 to 2.0 mm. Out of this range, thermoforming may be sometimes difficult.

The polylactic acid polymer sheet obtained in this manner has suitable thermoformability, and can be subjected to thermoforming with a general purpose forming machine. By preheating the sheet to a thermoforming temperature with e.g. an infrared heater, a hot plate heater, or by hot air, and thermoforming it, the sheet can be formed into blister packs, containers, etc.

Specific thermoforming methods include vacuum forming, plug-assisted forming, air-pressure forming, a method using male and female dies, and a method in which the sheet is deformed along a male die and then the male die is expanded. The sheet can be formed into any desired shape and size according to the intended use of the final product.

The thermoforming temperature of the polylactic acid polymer sheet is preferably within a range that satisfies the requirement (1) below.

(1) Forming temperature that satisfies the relation $0.005 < \Delta Hmf/\Delta Hm < 0.5$ when said polylactic acid polymer sheet to be subjected to thermoforming is heated, where $\Delta Hmf$ is a heat of fusion in a temperature range from the glass transition temperature to said forming temperature of said polylactic acid polymer sheet to be subjected to thermoforming.

The value $\Delta Hmf$ is the heat of fusion at a portion of a peak that indicates $\Delta Hm$ in the chart of Fig. 1, which is obtained by differential scanning calorimetry when the polylactic acid polymer sheet is heated. More specifically, the value $\Delta Hmf$ is the heat of fusion at a portion of the abovementioned peak within a temperature range from the glass transition temperature to the forming temperature (hatched portion in Fig. 1).

As described above, the value $\Delta Hmf/\Delta Hm$ is preferably in the range of 0.005 to 0.5, more preferably 0.01 to 0.3. Within this range, the sheet can be easily thermoformed into a desired shape, and the article obtained by thermoforming is high in heat resistance and impact resistance. If the value $\Delta Hmf/\Delta Hm$ is less than 0.005, the sheet tends to suffer from massive strains during thermoforming, thus deteriorating the heat resistance of the thermoformed article. If the value $\Delta Hmf/\Delta Hm$ is greater than 0.5, more than half of the oriented crystallized portion in the sheet begins to melt. Thus, while formability improves, the orientation of the sheet tends to be lost, thus deteriorating the impact resistance.

Because the value $\Delta Hm$ is the heat of fusion necessary to melt oriented crystals derived from resin B, when the sheet is subjected to thermoforming such that the value $\Delta Hmf$ satisfies the above conditions, resin A is presumably present in the matrix of resin B, which maintains crystals in a suitable amount, in a substantially molten state.

Thus, if a single crystalline polylactic acid polymer having the same D-lactic acid content as the average D-lactic acid content of the polylactic acid polymer sheet is used, the melting point itself may fall, resulting in insufficient thermoformability.

Description is now made on how the polylactic acid polymer sheet is subjected to air-pressure forming as thermoforming.

With both ends thereof chucked by chains with jaws, the polylactic acid polymer sheet is introduced into a far-infrared heater furnace to heat the sheet, and with the sheet kept chucked, the sheet is introduced into between upper and lower dies. Then, the dies are closed to press the sheet. The article formed by pressing the sheet is taken out of the dies, and the chucks are released. Since the polylactic acid polymer sheet is subjected to thermoforming while applying tension thereto using the chucks, not only shrinkage in the width direction of the polylactic acid polymer sheet but also shrinkage in the flow direction of the sheet can be suppressed to a level at which there will be no substantial influence on the sheet.

Since the polylactic acid polymer sheet comprises a layer comprising a polylactic acid polymer, it is safe to humans, and can be used as containers to be brought into direct contact with food.

Any excess material produced in any of the abovementioned steps can be recycled as a portion of the polylactic acid polymer composition.

The thermoformed article according to the present invention can be used as blister packs, which are widely used to exhibit various kinds of merchandise, box-shaped packages formed by bending, shell type packaging cases, etc. It can also be used as packages for such foods as daily dishes, vegetables, sandwiches and lunch that are used e.g. in convenience stores.

Examples

Examples of the invention and comparative examples are now described. It is to be understood that the present invention is not limited to these examples. Examples were evaluated for the following items.

[Evaluated items]

(1) Weight-average molecular weight

Using a gel permeation chromatograph HLC-8120GPC made by Tosoh Corporation, a calibration curve of standard polystyrene was created under the following conditions to measure the weight-average molecular weight.

Column used: Shim-Pack series made by Shimadzu Corporation (GPC-801C, GPC-804C, GPC-806C, GPC-8025C and GPC-800CP)
Solvent: chloroform
Concentration of sample solution: 0.2 wt/vol%
Amount of sample solution injected: 200 microliters
Flow rate of solvent: 1.0 ml/minute
Temperature of the pump, column and detector: 40 degrees Celsius

(2) Thickness of the sheet

As the thickness of the sheet, the average of thicknesses measured at ten points of the sheet using a dial gauge SM-1201 made by Teclock was calculated in micrometers.

(3) Heat resistance

The article obtained by thermoforming the sheet was left in a hot-air oven which was kept at 60 degrees Celsius for 30 minutes, and the volume reduction rate (%) was calculated.

$$\text{Volume reduction rate (\%)} = \{1 - (\text{volume of the formed article after heat treatment/volume of the formed article before heat treatment})\} \times 100$$

The symbols used in Table 2 have the following meanings.

○: The volume reduction rate was less than 3%.
△: The volume reduction rate was not more than 6% and not less than 3%.
×: The volume reduction rate was over 6%.

(4) Impact resistance of the sheet

Using a hydroshot impact tester (model HTM-1) made by Toyo Seiki Seisaku-Sho, Ltd., a member similar in shape to a firing pin of firearms and having a diameter of a half inch were hit against the sheet at a speed of 3 meters/second at 23 degrees C to calculate the energy necessary to destroy the sheet. The symbols in Table 2 have the following meanings:

O: The impact value necessary to break the sheet was not less than 20 kg · mm.
Δ : The impact value necessary to break the sheet was not less than 10 kg · mm and less than 20 kg · mm.
× : The impact value necessary to break the sheet was less than 10 kg · mm.

(5) Impact resistance of the formed article

The article obtained by thermoforming the sheet was filled with water, and after sealing its opening, it was dropped onto a concrete floor from the height of 1 meter. The article was then checked for any damage.

(6) Determination of the glass transition temperature (Tg) and the melting point (Tm) of the sheet

Under JIS-K-7121, the glass transition temperature (Tg) and the melting point (Tm) of the sheet were measured by differential scanning calorimetry (DSC) while heating the sheet at a heating rate of 10 degrees Celsius/minute.

(7) Determination of crystallinity

Under JIS-K-7121, the heat of fusion (ΔHm) and the heat of cold crystallization (ΔHc) that both originate from the polylactic acid resin in the sheet were measured while heating the sheet at a heating rate of 10 degrees Celsius/minute. From these values, the crystallinity of the polylactic acid polymer was calculated as follows:

$$\text{Relative crystallinity (\%)} = (\Delta Hm - \Delta Hc)/\Delta Hm \times 100$$

The value ΔHm was measured after the sheet has been subjected to heat treatment at 120 degrees Celsius for four hours, too.

(8) Calculation of ΔHmf (forming temperature)

Based on the temperature-dependent endothermic and exothermic chart obtained by differential scanning calorimetry (DSC), the forming temperature was calculated by converting the value ΔHm and the value ΔHmf to the predetermined forming temperature (i.e. calculated from the values ΔHm and ΔHmf/ΔHm).

(9) Measurement of haze

Haze was measured under JIS K 7105. The symbols in Table 2 have the following meanings:

○: The haze was not more than 10%.
Δ : The haze was over 10% and not more than 20%.
× : The haze was over 20%.

(10) Formability

Air-pressure forming (air pressure: 4 kg/cm$^2$) was carried out using a mold measuring 100 mm in diameter and 30 mm deep and having a drawing ratio of 0.3 (mold temperature: 60 degrees Celsius). The shape of the article thus formed was observed, and evaluated in three stages.

○: Good
Δ : Practically passable
× : Not good

For heating, an INFRASTEIN heater was used. The temperature of each sheet immediately before forming was measured using a far-infrared thermometer.

(11) Summary evaluation

The sheet of each example was formed into a food container shown in Figs. 2(a) and 2(b), a blister pack shown in Figs. 2(c) and 2(d), and a shell-type packaging case shown in Figs. 2(e) and 2(f).
The symbols in Table 2 have the following meanings:

○: Practically usable
△ : Barely practically passable
× : Not practically usable

[Production of polylactic acid polymer]

(Production Example 1)

100 kg of L-lactide made by Purac Japan (trade name: PURASORB L) with 15 ppm of tin octylate added was put in a 500-liter batch type polymerization tank having an agitator and a heater. In the polymerization tank, after nitrogen substitution, the L-lactide was polymerized at 185 degrees C for 60 minutes while being agitated at a speed of 100 rpm. The thus obtained molten product was supplied to a parallel twin screw extruder having a diameter of 40 mm and including vacuum vents in three stages (made by Mitsubishi Heavy Industries, Ltd.), and was extruded in the form of strands at 200 degrees C while being deaerated at a vent pressure of 4 Torr. The strands were then pelletized.
The thus obtained polylactic acid polymer (hereinafter referred to as "B1") had a weight-average molecular weight of 200000, and its L-lactic acid content was 99.5%. The melting point measured by DSC was 171 degrees C.

(Production Examples 2 and 3)

94 kg of L-lactide (trade name: PURASORB L) and 6 kg of DL-lactide (trade name: PURASORB DL), both made by Purac Japan, with 15 ppm of tin octylate added were put in a 500-liter batch type polymerization tank having an agitator and a heater. In the polymerization tank, after nitrogen substitution, the mixture was polymerized at 185 degrees C for 60 minutes while being agitated at a speed of 100 rpm. The thus obtained molten product was supplied to a parallel twin screw extruder having a diameter of 40 mm and including vacuum vents in three stages (made by Mitsubishi Heavy Industries, Ltd.), and was extruded in the form of strands at 200 degrees C while being deaerated at a vent pressure of 4 Torr. The strands were then pelletized.
The thus obtained polylactic acid polymer (hereinafter referred to as "B2") had a weight-average molecular weight of 200000, and its L-lactic acid content was 97.0%. The melting point measured by DSC was 168 degrees C.
A polylactic acid polymer (hereinafter "B3") having a weight-average molecular weight of 200000 and an L-lactic acid content of 94.8% was prepared in the same manner as B2 except that the amounts of the L-lactide and DL-lactide were changed. Its melting point, as measured by DSC, was 165 degrees C.

(Production Examples 4 and 5)

80 kg of L-lactide (trade name: PURASORB L) and 20 kg of DL-lactide (trade name: PURASORB DL), both made by Purac Japan, with 15 ppm of tin octylate added were put in a 500-liter batch type polymerization tank having an agitator and a heater. In the polymerization tank, after nitrogen substitution, the mixture was polymerized at 185 degrees C for 60 minutes while being agitated at a speed of 100 rpm. The thus obtained molten product was supplied to a parallel twin screw extruder having a diameter of 40 mm and including vacuum vents in three stages (made by Mitsubishi Heavy Industries, Ltd.), and was extruded in the form of strands at 200 degrees C while being deaerated at a vent pressure of 4 Torr. The strands were then pelletized.
The thus obtained polylactic acid polymer (hereinafter referred to as "A1") had a weight-average molecular weight of 200000, and its L-lactic acid content was 89.7%.
A polylactic acid polymer (hereinafter "A2") having a weight-average molecular weight of 200000 and an L-lactic acid content of 79.6% was prepared in the same manner as A1 except that the amounts of the L-lactide and DL-lactide were changed. Neither A1 nor A2 had a crystal melting point, as measured by DSC, which means that they were both amorphous.

(Production Example 6)

85 kg of L-lactide (trade name: PURASORB L) and 15 kg of DL-lactide (trade name: PURASORB DL), both made by Purac Japan, with 15 ppm of tin octylate added were put in a 500-liter batch type polymerization tank having an agitator and a heater. In the polymerization tank, after nitrogen substitution, the mixture was polymerized at 185 degrees C for 60 minutes while being agitated at a speed of 100 rpm. The thus obtained molten product was supplied to a parallel twin screw extruder having a diameter of 40 mm and including vacuum vents in three stages (made by Mitsubishi Heavy Industries, Ltd.), and was extruded in the form of strands at 200 degrees C while being deaerated at a vent pressure of 4 Torr. The strands were then pelletized.

The thus obtained polylactic acid polymer (hereinafter referred to as "C") had a weight-average molecular weight of 200000, and its L-lactic acid content was 92.6%. The crystalline melting point, as measured by DSC, was 131 degrees C.

Data on the polylactic acid polymers produced in the respective Production Examples are shown in Table 1.

Table 1

| Polylactic acid polymer | | Rate of D-lactic acid (%) | Rate of L-lactic acid (%) | Weight-average molecular weight | Glass transition temperature | Melting point (°C) | Crystallinity | ΔHm (*1) (J/g) |
|---|---|---|---|---|---|---|---|---|
| Resin A | A1 | 10.3 | 89.7 | 200,000 | 53 | - | Amorphous | 0 |
| | A2 | 20.4 | 79.6 | 200,000 | 52 | - | Amorphous | 0 |
| Resin B | B1 | 0.5 | 99.5 | 200,000 | 56 | 178 | High crystalline | 50 |
| | B2 | 2.0 | 98.0 | 200,000 | 56 | 162 | High crystalline | 42 |
| | B3 | 5.2 | 94.8 | 200,000 | 56 | 145 | Medium crystalline | 35 |
| Other | C | 7.4 | 92.6 | 200,000 | 53 | 131 | Low crystalline | 13 |
| *1 : Here, ΔHm is the value after the pellets obtained in each production example has been subjected to heat treatment at 120 degrees C for four hours. | | | | | | | | |

(Examples of the Invention 1-5 and Comparative Examples 1-4)

Resins A and B shown in Table 2 were sufficiently dried, and mixed together at the rates shown in Table 2. Dried particulate silica having an average particle diameter of 1.4 micrometers (trade name: Silysia 100, made by Fuji Silysia Chemical, Ltd.) was added by 0.1 parts by weight based on 100 parts by weight of the total amount of resins A and B, and the mixture was extruded in the form of strands by a parallel twin screw extruder having a diameter of 25 mm. The strands were then water-cooled and cut into 2-milimeter-long pellets of a polylactic acid polymer composition by a pelletizer. The thus obtained pellets were subjected to aging at 120 degrees C for 4 hours. Then, the heat of fusion ΔHm necessary to melt crystals was measured for each example by DSC. The results are shown in Table 2.

The pellets obtained were sufficiently dried, and extruded at 210 degrees C through a coat hanger type mouthpiece with a parallel extruder having a diameter of 75 mm in the shape of a sheet. The thus coextruded sheet was cooled rapidly with a casting roll kept at about 43 degrees C to obtain an unstretched sheet. Using a film tenter made by Mitsubishi Heavy Industries, Ltd., this sheet was heated to 75 degrees C with an infrared heater while kept in contact with a hot water circulation roll and stretched longitudinally by 2.0 times between rolls that are rotating at different peripheral speeds. The sheet was then guided into the tenter while being held by clips and stretched in the direction transverse to the feed direction of the sheet by 2.8 times at 75 degrees C. The thus stretched sheet was subjected to heat treatment at 135 degrees C for 30 seconds while applying tension thereto. A sheet having a thickness of 300 micrometers was obtained. The shrinkage rate of the sheet thus obtained was not more than 5 percent both in the longitudinal and transverse directions when placed in a 90 degrees C oven for 30 minutes. The sheet thus showed good high-temperature dimensional stability. The values ΔHm, ΔHc, Tg and Tm of the sheet obtained were measured by DSC.

The sheet obtained were preheated to 145 degrees C, and subjected to air-pressure forming (air pressure: 4 kg/cm2) in a mold (mold temperature: 60 degrees C) measuring 100 mm in diameter and 30 mm deep and having a drawing ratio of 0.3.

Various parameters were measured and assessed during the abovementioned various steps. They are shown in Table 2.

Table 2

| | | | | Examples of the invention | | | | | Comparative Examples | | | |
|---|---|---|---|---|---|---|---|---|---|---|---|---|
| | | | | 1 | 2 | 3 | 4 | 5 | 1 | 2 | 3 | 4 |
| Polylactic acid polymer | Resin A | | | A1 | A1 | A1 | A1 | A2 | A1 | A1 | A1 | A1 |
| | | (parts by weight) | | 100 | 100 | 100 | 100 | 100 | 100 | 100 | 0 | 0 |
| | | D% | | 10.3 | 10.3 | 10.3 | 10.3 | 20.4 | 10.3 | 10.3 | 10.3 | 10.3 |
| | Resin B | | | B1 | B1 | B1 | B3 | B3 | B1 | B1 | B3 | |
| | | (parts by weight) | | 100 | 50 | 30 | 20 | 200 | 200 | 10 | 100 | |
| | | D% | | 0.5 | 0.5 | 0.5 | 5.2 | 5.2 | 0.5 | 0.5 | 5.2 | |
| | Other resins | | | | | | | | | | | C |
| | | (parts by weight) | | | | | | | | | | 100 |
| | | D% | | | | | | | | | | 7.4 |
| Composition | Average D% | | | 5.4 | 7.0 | 8.0 | 9.5 | 10.3 | 3.8 | 9.4 | 5.2 | 7.4 |
| | Tg | (°C) | | 56 | 56 | 55 | 53 | 53 | 56 | 53 | 56 | 53 |
| | Tm | (°C) | | 177 | 176 | 176 | 144 | 145 | 178 | 176 | 145 | 131 |
| | ΔHm (*1) | (J/g) | | 25 | 17 | 12 | 6 | 23 | 33 | 5 | 35 | 13 |
| Sheet | Stretching heat fixing temperature | (°C) | | 135 | 135 | 120 | 120 | 135 | 135 | 90 | 135 | 120 |
| | Thickness | (mm) | | 0.3 | 0.3 | 0.3 | 0.3 | 0.3 | 0.3 | 0.3 | 0.3 | 0.3 |
| | Haze | | | O | O | O | O | O | O | O | O | O |
| | Impact resistance | | | O | O | O | Δ | Δ | O | × | O | Δ |
| | Tg | (°C) | | 56 | 56 | 55 | 53 | 53 | 56 | 53 | 56 | 53 |
| | Tm | (°C) | | 177 | 177 | 177 | 145 | 145 | 178 | 177 | 145 | 131 |
| | ΔHm | (J/g) | | 23 | 15 | 11 | 5 | 22 | 11 | 4 | 45 | 13 |
| | ΔHc | (J/g) | | 2.5 | 1.0 | 0.5 | 0.2 | 1.0 | 2.0 | 0.8 | 2.0 | 1.4 |
| | ΔHm−ΔHc | | | 20 | 14 | 10 | 5 | 20 | 29 | 3 | 43 | 12 |
| | (ΔHm−ΔHc)/ΔHm | | | 0.9 | 0.95 | 0.95 | 0.95 | 0.95 | 0.95 | 0.8 | 0.95 | 0.9 |
| | Sheet temperature during forming | (°C) | | 145 | 145 | 145 | 120 | 120 | 145 | 120 | 130 | 110 |
| | ΔHmf/ΔHm | | | 0.2 | 0.2 | 0.2 | 0.1 | 0.3 | 0.2 | 0.1 | 0.4 | 0.3 |
| Heat-formed article | Air pressure applied | (kg/cm²) | | 4 | 4 | 4 | 4 | 4 | 4 | 4 | 4 | 4 |
| | Formability | | | Δ | Δ | O | O | Δ | × | × | × | O |
| | Transparency | | | O | O | O | O | O | — | O | — | O |
| | Impact resistance | | | O | O | O | Δ | O | — | × | — | Δ |
| | Heat resistance | | | O | O | Δ | Δ | O | — | × | — | × |
| | General assessment | Blister packs | | O | O | O | Δ | Δ | × | × | × | × |
| | | Food containers | | Δ | O | O | Δ | Δ | × | × | × | × |
| | | Shell type packaging cases | | Δ | O | O | Δ | Δ | × | × | × | × |

*1: Here, ΔHm is a value after heat treatment for four hours at 120 degrees C.

Industrial Application

Because the polylactic acid polymer composition to be thermoformed according to this invention comprises a mixture of an essentially amorphous polylactic acid polymer and a crystalline polylactic acid polymer, it exhibits impact resistance and heat resistance inherent to the crystalline polylactic acid polymer. At the same time, the composition has flexibility attributable to the amorphous polylactic acid polymer.

The sheet to be thermoformed obtained from the polylactic acid polymer composition according to the invention, and the article obtained by thermoforming this sheet are superior in impact resistance, heat resistance and transparency.

The thermoformed article according to the present invention can be used as various end products such as blister packs, food containers and shell type packaging cases.

**Claims**

1. A polylactic acid polymer composition to be subjected to thermoforming, said composition comprising a mixture of an essentially amorphous polylactic acid polymer and a crystalline polylactic acid polymer, wherein said amorphous polylactic acid polymer is present in an amount of more than 50% of said crystalline polylactic acid polymer.

2. A polylactic acid polymer sheet to be subjected to thermoforming which is formed of the polylactic acid polymer composition to be subjected to thermoforming of claim 1 wherein said essentially amorphous polylactic acid polymer comprises L-lactic acid and D-lactic acid of which the content ratio (L-lactic acid (%) : D-lactic acid (%)) is 92 : 8 to 8 : 92, and said crystalline polylactic acid polymer contains L-lactic acid and D-lactic acid of which the content ratio (L-lactic acid (%) : D-lactic acid (%)) is not less than 94 : 6 or not more than 6 : 94, said crystalline polylactic acid polymer being present in an amount of 10 to 200 parts by weight based on 100 parts by weight of said amorphous polylactic acid polymer.

3. The polylactic acid polymer sheet to be subjected to thermoforming of claim 2 which has a heat of fusion $\Delta Hm$ when the sheet is heated and a heat of cold crystallization $\Delta Hc$ produced due to crystallization during heating, wherein the value ($\Delta Hm - \Delta Hc$) is 5 to 20 J/g, and the value $\{(\Delta Hm - \Delta Hc)/ \Delta Hm \}$ is not less than 0.85.

4. The polylactic acid polymer sheet to be subjected to thermoforming of claim 2 or 3 wherein said polylactic acid polymer composition to be subjected to thermoforming contains an aliphatic polyester other than a polylactic acid polymer in an amount of 0.1 to 10 parts by weight per 100 parts by weight of the total amount of said essentially amorphous polylactic acid polymer and said crystalline polylactic acid polymer.

5. An article obtained by subjecting the polylactic acid polymer sheet of any of claims 2 to 4 to thermoforming at a forming temperature that satisfies the below conditions (1).
(1) Forming temperature that satisfies the relation $0.005 < \Delta Hmf/\Delta Hm < 0.5$ when said polylactic acid polymer sheet to be subjected to thermoforming is heated, where $\Delta Hmf$ is a heat of fusion in a temperature range from the glass transition temperature to said forming temperature of said polylactic acid polymer sheet to be subjected to thermoforming.

**Patentansprüche**

1. Polymilchsäurepolymerzusammensetzung, die einer Thermoformung unterworfen wird, wobei die Zusammensetzung ein Gemisch aus einem im wesentlichen amorphen Polymilchsäurepolymer und einem kristallinen Polymilchsäurepolymer umfasst, wobei das amorphe Polymilchsäurepolymer in einer Menge von mehr als 50% des kristallinen Polymilchsäurepolymers vorhanden ist.

2. Polymilchsäurepolymerfolie, die einer Thermoformung unterworfen wird, hergestellt aus der Polymilchsäurepolymerzusammensetzung, die einer Thermoformung unterworfen wird, nach Anspruch 1, wobei das im wesentlichen amorphe Polymilchsäurepolymer L-Milchsäure und D-Milchsäure umfasst, die in einem Verhältnis (L-Milchsäure (%) : D-Milchsäure (%)) von 92 : 8 bis 8 : 92 vorliegen, wobei das kristalline Polymilchsäurepolymer L-Milchsäure und D-Milchsäure enthält, die in einem Verhältnis (L-Milchsäure (%) : D-Milchsäure (%)) von nicht weniger als 94 : 6 oder nicht mehr als 6 : 94 vorliegen, und wobei das kristalline Polymilchsäurepolymer in einer Menge von 10 bis 200 Gewichtsteilen vorliegt, bezogen auf 100 Gewichtsteile des amorphen Polymilchsäurepolymers.

3. Polymilchsäurepolymerfolie, die einer Thermoformung unterworfen wird, nach Anspruch 2, die eine Schmelzwärme $\Delta Hm$ aufweist, wenn die Folie erwärmt wird, und die eine Kaltkristallisationswärme $\Delta Hc$, erzeugt durch die Kristallisation beim Erwärmen, aufweist, wobei der Wert ($\Delta Hm - \Delta Hc$) 5 bis 20 J/g beträgt und wobei der Wert $\{(\Delta Hm - \Delta Hc) / \Delta Hm\}$ nicht weniger als 0,85 beträgt.

**EP 1 577 346 B1**

**4.** Polymilchsäurepolymerfolie, die einer Thermoformung unterworfen wird, nach Anspruch 2 oder 3, wobei die Polymilchsäurepolymerzusammensetzung, die einer Thermoformung unterworfen wird, einen aliphatischen Polyester, der kein Polymilchsäurepolymer ist, in einer Menge von 0,1 bis 10 Gewichtsteilen enthält, bezogen auf 100 Gewichtsteile der Gesamtmenge des im wesentlichen amorphen Polymilchsäurepolymers und des kristallinen Polymilchsäurepolymers.

**5.** Artikel, erhalten durch Thermoformen der Polymilchsäurepolymerfolie nach einem der Ansprüche 2 bis 4 bei einer Formtemperatur, die die folgende Bedingung (1) erfüllt:

(1) eine Formtemperatur, die die Bedingung 0,005 < Δhm / Δhm < 0,5 erfüllt, wenn die Polymilchsäurepolymerfolie, die einer Thermoformung unterworfen wird, erwärmt wird, wobei ΔHmf die Schmelzwärme in einem Temperaturbereich von der Glasübergangstemperatur bis zur Formtemperatur der Polymilchsäurepolymerfolie, die einer Thermoformung unterworfen wird, ist.

## Revendications

**1.** Composition polymère d'acide polylactique devant être soumise à un thermoformage, ladite composition comprenant un mélange constitué d'un polymère d'acide polylactique essentiellement amorphe et d'un polymère d'acide polylactique cristallin, dans laquelle ledit polymère d'acide polylactique amorphe est présent en une quantité de plus de 50 % dudit polymère d'acide polylactique cristallin.

**2.** Feuille polymère d'acide polylactique devant être soumise à un thermoformage, qui est formée de la composition polymère d'acide polylactique devant être soumise à un thermoformage selon la revendication 1, dans laquelle ledit polymère d'acide polylactique essentiellement amorphe comprend de l'acide L-lactique et de l'acide D-lactique, dont le rapport des teneurs (acide L-lactique (%) / acide D-lactique (%)) est de 92/8 à 8/92, et ledit polymère d'acide polylactique cristallin contient de l'acide L-lactique et de l'acide D-lactique dont le rapport des teneurs (acide L-lactique (%) / acide D-lactique (%)) n'est pas inférieur à 94/6 ou pas supérieur à 6/94, ledit polymère d'acide polylactique cristallin étant présent en une quantité de 10 à 200 parties en poids sur la base de 100 parties en poids dudit polymère d'acide polylactique amorphe.

**3.** Feuille polymère d'acide polylactique devant être soumise à un thermoformage selon la revendication 2, qui possède une chaleur de fusion ΔHm quand la feuille est chauffée et une chaleur de cristallisation à froid ΔHc produite du fait de la cristallisation au cours du chauffage, où la valeur (ΔHm - ΔHc) est de 5 à 20 J/g, et la valeur {(ΔHm - ΔHc)/ ΔHm} n'est pas inférieure à 0,85.

**4.** Feuille polymère d'acide polylactique devant être soumise à un thermoformage selon la revendication 2 ou 3, dans laquelle ladite composition polymère à base d'acide polylactique devant être soumise à un thermoformage contient un polyester aliphatique autre qu'un polymère d'acide polylactique en une quantité de 0, 1 à 10 parties en poids pour 100 parties en poids de la quantité totale dudit polymère d'acide polylactique essentiellement amorphe et dudit polymère d'acide polylactique cristallin.

**5.** Article obtenu en soumettant la feuille polymère d'acide polylactique selon l'une quelconque des revendications 2 à 4 à un thermoformage, à une température de formage qui satisfait aux conditions ci-dessous (1).

(1) température de formage satisfaisant à la relation 0,005 < ΔHmf/ΔHm < 0,5 quand ladite feuille polymère d'acide polylactique devant être soumise à un thermoformage est chauffée, où ΔHmf est une chaleur de fusion dans une plage de températures allant de la température de transition vitreuse à ladite température de formage de ladite feuille polymère d'acide polylactique devant être soumise à un thermoformage.

**13**

Fig.1

EP 1 577 346 B1

# Fig.2

(a)

(b)

(c)

(d)

(e)

(f)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8073628 A
- JP 9025345 A
- JP 200017163 A
- JP 2002155197 A